# EUROPEAN PATENT SPECIFICATION

(11) **EP 1 870 322 B1**
(45) Date of publication and mention of the grant of the patent: **04.08.2010**
(21) Application number: 07110563.9
(22) Date of filing: 19.06.2007
(51) Int. Cl.: B62D 35/02, B62D 35/00

(54) **System for optimizing the aerodynamics of the underside of a semi-trailer of an articulated industrial or commercial vehicle**
System zur Optimierung der aerodynamischen Eigenschaften des Unterbodens eines Sattelzug-Anhängers
Système pour optimiser les caractéristiques aérodynamiques du dessous d'une semi-remorque

(30) Priority: 20.06.2006 IT MI20061175
(43) Date of publication of application: 26.12.2007
(73) Proprietor: IVECO S.p.A., 10156 Torino (IT)
(72) Inventor: Guariento, Dario, 10022 Carmagnola (IT); Posenato, Giovanni, 10071 Borgaro Torinese (IT); Lupo, Filippo Maria, 80038 Pomigliano d'Arco (IT); Consano, Ludovico, 10023 Chieri (IT)
(74) Representative: Borsano, Corrado

(56) References cited:
- EP-A- 1 035 006
- EP-A1- 0 030 122
- WO-A-2004/062953
- DE-U1- 29 922 043
- FR-A- 2 863 244
- JP-A- 9 109 937

## Description

The present invention relates to a system for optimizing the aerodynamics of the underside of a semi-trailer of an articulated industrial or commercial vehicle.

The energy efficiency of motor vehicles is known to be directly related to the aerodynamic drag and turbulence caused by the motion of the vehicle.

Efficient fuel consumption has become a paramount concern in view of increasing fuel costs and overall fuel usage, also due to problems associated with pollution.

These requirements are even more important in the case of large vehicles, such as industrial and commercial vehicles. The aerodynamic performance of the majority of these vehicles is reduced due to their overall shape, for instance the flat-faced frontal area of the cab, or the parts of the trailer, or semi-trailer, which are square, in articulated vehicles.

As the vehicle moves, a significant air turbulence is produced, particularly at the rear of the vehicle, which results in increased aerodynamic drag and leads to higher fuel consumption. This phenomenon increases in proportion to the speed of the vehicle, reaching particularly high levels on roads where vehicles can travel at high speeds, such as motorways.

The reduced aerodynamic efficiency of these vehicles is partly due to the airflow generated underneath the moving vehicle. This airflow breaks directly against the wheels and increases the higher the vehicle structure is from the ground, and ultimately the larger the diameter of the wheels, making it a phenomenon of significant importance in case of industrial or commercial vehicles.

Attempts aimed at solving this problem are known in the prior art. These consist of mounting vertical fairings on the sides of the tractor and trailer, to close the voids at the sides of the vehicle and also cover the wheels.

There are also known from generic EP 1035006 A1 and from DE 29922043 U1 devices for optimizing the aerodynamics of the underside of semitrailer of an articulated industrial vehicles comprising an aerodynamic underside suitable to screen the fixtures of the semitrailer, and suitable to direct an energized airflow towards the rear of the vehicle to recover pressure downstream of vehicle; said underside also comprises a front part, arranged between the towing fixture of the tractor and the beginning of the wheel zone on the semitrailer, a central part, in correspondence with the wheel zone of the semitrailer, and a rear part, between the end of the wheel zone and the rear end of the semitrailer.

However these systems are not effective in solving the problem of air turbulence to the rear of the vehicle, which is an important cause of increased aerodynamic drag.

Therefore the purpose of the present invention is to describe a system for optimizing the aerodynamics of the underside of a semi-trailer of an articulated industrial or commercial vehicle, that overcomes the problems described above.

In particular, the present invention relates to a system for optimizing the aerodynamics of the underside of a semi-trailer of an articulated industrial or commercial vehicle, as better described in the claims, which are an integral part of this description.

Further purposes and advantages of the invention will become clear from the following detailed description of a preferred embodiment (and the relative alternative embodiments), and from the drawings that are attached hereto, which are merely illustrative and not limitative, in which:

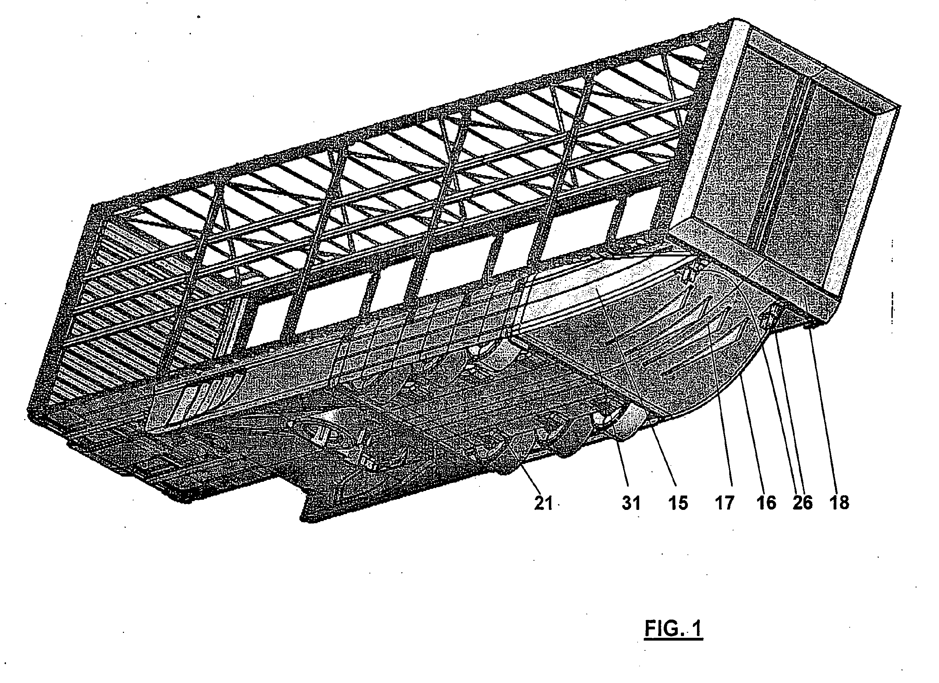

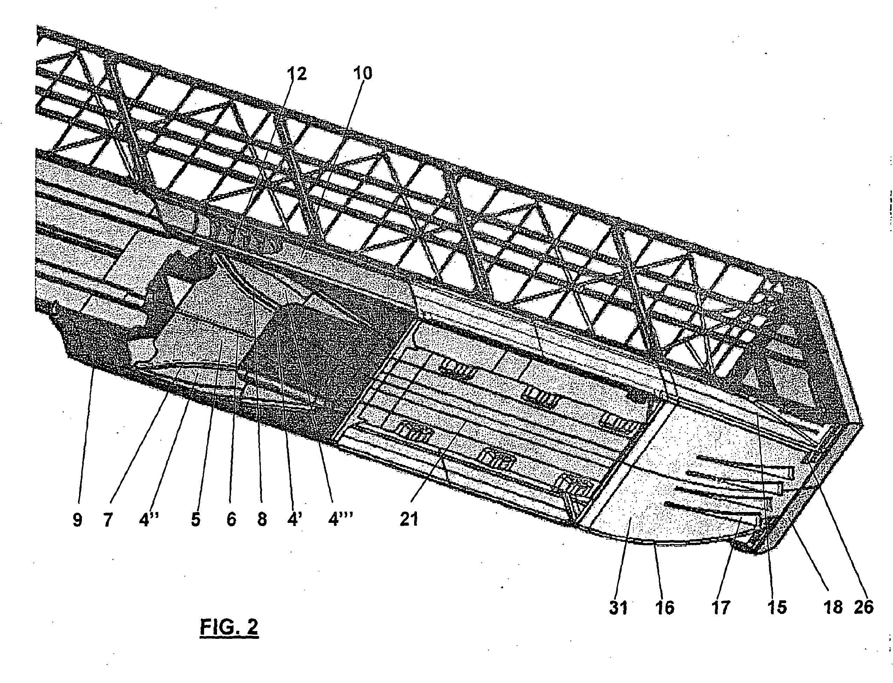

figures 1 and 2 are two perspective views of a semi-trailer assembly comprising an aerodynamic underside according to the present invention;

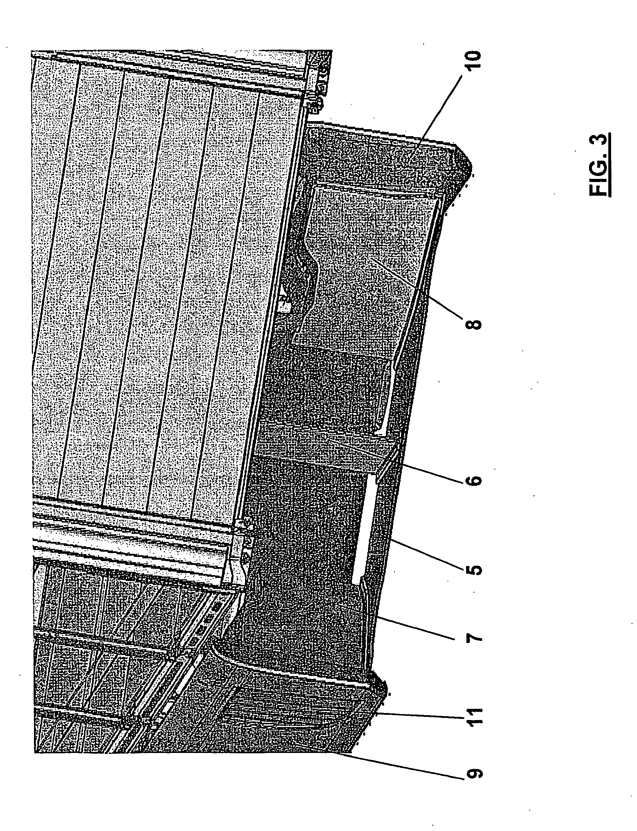

figure 3 is a perspective view of the frontal area of the semi-trailer;

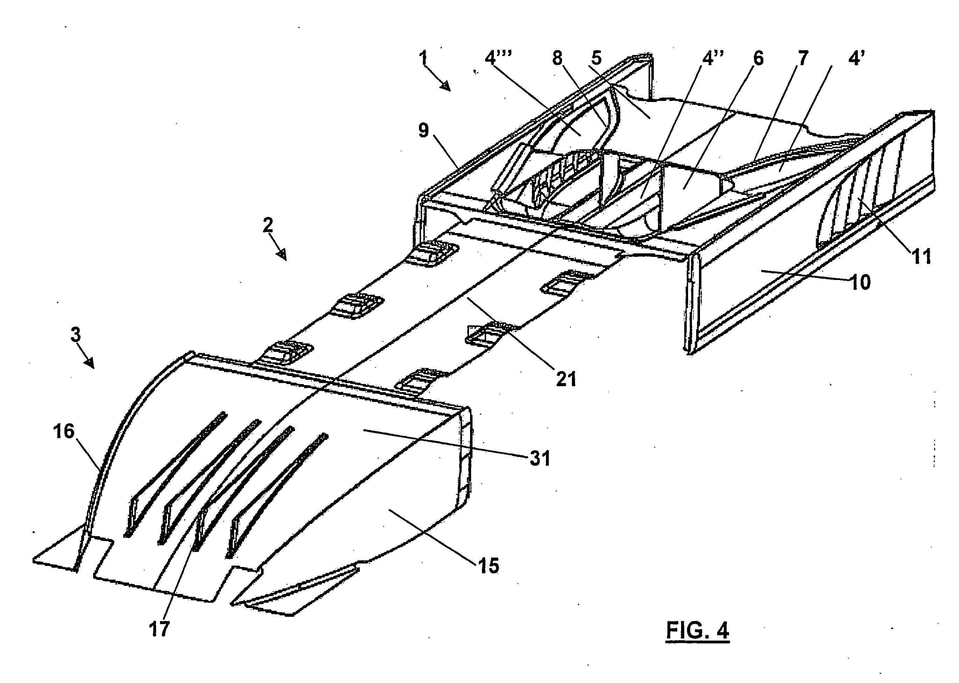

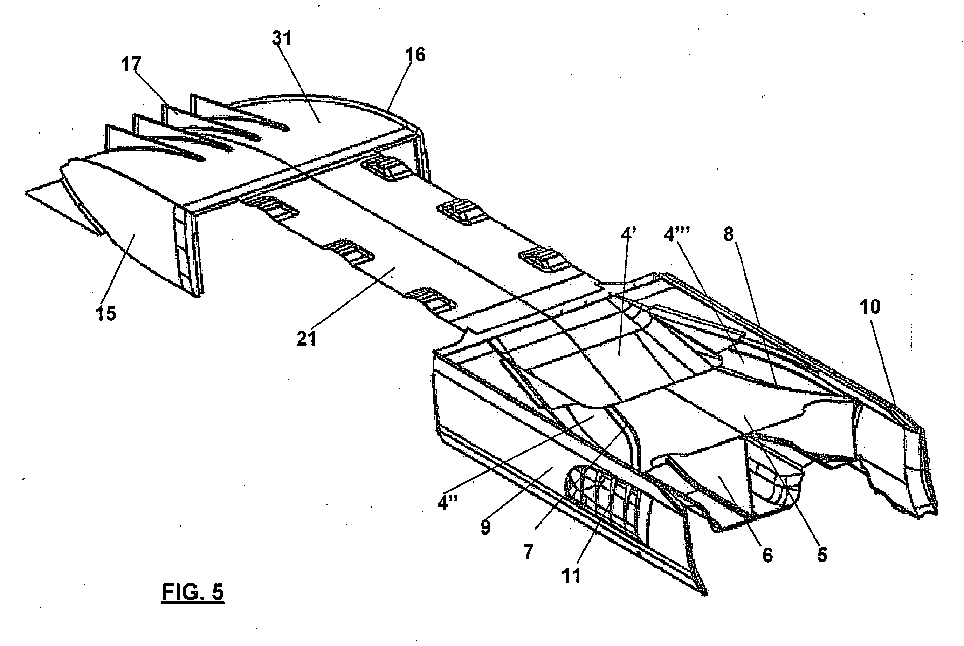

figures 4 and 5 are two perspective views of the upturned aerodynamic underside;
figure 6 shows a rear underrun bar.

In the drawings the same reference numbers and letters are used to indicate the same parts or components.

It has been found that all non-aerodynamically-shaped components (i.e. axles, suspensions, wheels, tanks, side members, differentials, etc.) arranged beneath the semi-trailer of articulated vehicles must be exposed as little as possible to the main airflow, coming from underneath the bumpers in the frontal area of the tractor (engine), in order to minimise their contribution to aerodynamic drag.

For that purpose the bottom wall of the semi-trailer is "covered" externally with an aerodynamic underside that, on the one hand, screens the fixtures of the semi-trailer and, on the other, directs a clean and energized airflow, through air vents in the side fairings, towards the rear part which comprises an air diffuser.

The latter, which is an integral part of the underside, recovers pressure downstream of the semi-trailer, assisting the side fairings, which are locally tapered for the same purpose,; the diffuser is provided with fins for the specific purpose of directing the airflow as evenly as possible in the longitudinal direction, smoothing it before guiding it downstream of the semi-trailer.

The aerodynamic underside contributes significantly to guiding the airflows to join behind the semi-trailer within the shortest possible distance, filling the partial air vacuum and reducing the aerodynamic turbulence generated to the rear of the vehicle in motion. Thus, the basic pressure on the rear end of the semi-trailer is maximised and then the relative tractive resistance is minimised, which is definitely the most significant contributor to aerodynamic drag in industrial or commercial vehicles.

According to the invention, with reference to the attached drawings, the aerodynamic underside comprises a front part 1, arranged between the towing fixture of the vehicle tractor and the beginning of the wheel zone on the semi-trailer, a central part 2, in correspondence with the wheel zone on the semi-trailer, and a rear part 3, between the end of the wheel zone and the rear end of the semi-trailer. The front, central and rear parts comprise coverings of respective parts of the underside of the semi-trailer joined together in series, starting at the front from a height that corresponds to the underside of the semi-trailer, to a lower minimum height from the ground, in said central part, then rising again in the rear part to the height corresponding to the underside of the semi-trailer. The front and rear parts are provided with a slight longitudinal curvature so as to ensure a smooth longitudinal profile, with no sharp areas.

The front part comprises:
- a covering 4 of the underside of the semi-trailer rearwardly sloping downwards, which is joined to the central part 2;
- a horizontal flap 5, arranged beneath - and at a distance from - the covering 4, suitable to form a guide for the airflow coming from the engine (tractor);
- dividing elements 6, 7, 8 arranged vertically in relation to the cover, and supporting the flap 5, also and especially for correctly directing (guiding) the airflow towards the underside of the vehicle; there is a central and essentially rectilinear vertical element 6, connecting the centre of the flap 5 with the centre of the covering 4 of the front part; there are also two vertical side elements 7, 8 curved from the sides towards the centre, suitable to separate the central area 4', where the airflow from the flap is directed, from the two side areas 4", 4"' of the covering 4 of the front part;
- two vertical side panels (fairings) 9, 10 as extensions of the side walls of the semi-trailer, provided with air vents 11, 12. The panels 9, 10 distinctly separate the external airflow, which goes along the sides of the vehicle, from the internal flow, which goes along the underside. The air vents 11, 12 direct air from the outer sides of the vehicle towards the inside in the two side areas 4", 4"'.

The central part 2 comprises a covering 21 of the underside of the semi-trailer, said covering being essentially flat and joined at the front to the front part 1 and at the back to the rear part 3, extending horizontally and longitudinally between the wheels of the semi-trailer. Side fairings 13 and 14 are provided at the sides of said central part, as extensions of the fairings of the front part 9, 10. Their lower edge is joined to the edge of the central part.

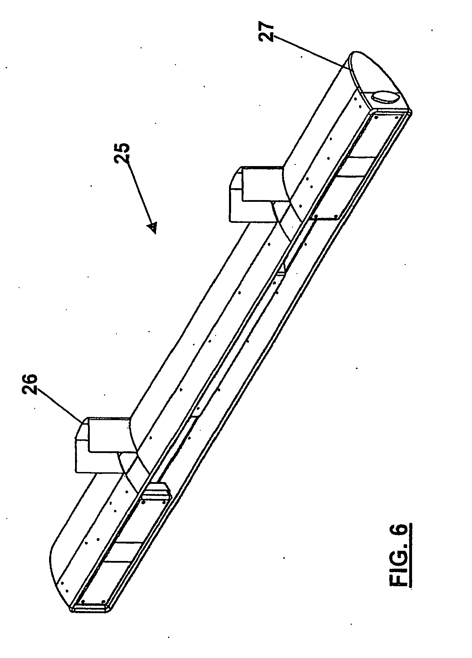

The rear part 3 acts as an air diffuser and comprises:
- a covering 31 of the underside of the semi-trailer rearwardly sloping upwards;
- side fairings 15, 16, as extensions of the fairings 13 and 14 of the central part, tapered and converging, the lower edges of said third fairings being joined to the edges of the rear part 3;
- fixed longitudinal vertical parallel fins 17 (there are four in the non-limiting example described here), the purpose of which is to keep the airflow rectilinear, without generating turbulence, and optimize said airflow;
- preferably a projectingly mounted underrun bar 25, fixed by means of the supports 26 to the lower edge of the semi-trailer, to support the rear lamps and registration plate-holder, having an aerodynamic rear profile 27 with rounded edges, so as not to hinder the airflow from the underneath of the vehicle (see fig. 6).

The rear part also comprises a projectingly mounted extension 18 on the external underside of the rear part of the semi-trailer, possibly of the inflatable and retractable type, joined to the lower edge of the doors of the semi-trailer. The lower edge of the projecting extension is rectilinear with an inclination equal to that of the end of the air diffuser.

Thus, the airflow from underneath the trailer is directed correctly and pushed upwards in the rear part of the trailer, creating a good flow breakdown effect.

Side projections are provided along the entire length of the edges of the sides of the aerodynamic underside. Besides stiffening and reinforcing the structure, these projections also confine the airflow to beneath the trailer, preventing it from escaping and keeping it separate from the external airflow.

As for the materials used, the side fairings can be made of aluminium, while the aerodynamic underside can be made of fibreglass or composite resin, in any case of a lightweight material, so as to avoid any excessive increase in the overall weight of the vehicle.

It will be apparent to the person skilled in the art that other alternative and equivalent embodiments of the invention can be conceived and reduced to practice without departing from the scope of the claims.

From the description set forth above it will be possible for the person skilled in the art to embody the invention without introducing any further construction details.

## Claims

1. System for optimizing the aerodynamics of the underside of a semi-trailer of an articulated industrial or commercial vehicle, comprising an aerodynamic underside suitable to screen the fixtures of the semi-trailer, and suitable to direct an energized airflow towards the rear of the vehicle to recover pressure downstream of the vehicle, said aerodynamic underside comprising:
- a front part (1), arranged between the towing fixture of the vehicle tractor and the beginning of the wheel zone on the semi-trailer,
- a central part (2), in correspondence with the wheel zone on the semi-trailer;
- a rear part (3), between the end of the wheel zone and the rear end of the semi-trailer,
said front, central and rear parts comprising coverings (4, 21, 31) of respective parts of the underside of the semi-trailer joined together in series, starting from the front from a height corresponding to the underside of the semi-trailer, to a lower minimum height from the ground, in said central part (2), then rising again in the rear part to the height corresponding to the underside of the semi-trailer,
said coverings (4, 21, 31) of the front and rear parts being curved longitudinally so as to ensure a smooth longitudinal profile, with no sharp areas;
the system **characterised in that** it
further comprises in correspondence with said front part:
- a horizontal flap (5), arranged beneath and at a distance from the covering (4), suitable to form a guide for the airflow coming from the vehicle tractor;
- dividing elements (6, 7, 8) arranged vertically with respect to the covering, and supporting the flap (5), to direct the airflow, said vertical elements comprising: a central and essentially rectilinear vertical element (6) connecting the centre of the flap (5) with the centre of the covering (4); two vertical side elements (7, 8) curved from the sides towards the centre, suitable to separate the central area (4') of the covering (4) from the two side areas (4", 4"') of the covering (4);
- first vertical side fairings (9, 10) as extensions of the side walls of the semi-trailer, provided with air vents (11, 12), said first fairings (9, 10) being suitable to separate the external airflow, which flows along the sides of the vehicle, from the internal airflow, which flows along the underside, said air vents (11, 12) being suitable to direct air coming from the outer sides of the vehicle towards the inside into said side areas (4", 4"').

2. System for optimizing the aerodynamics according to claim 1, wherein in correspondence with said central part (2) it also comprises second side fairings (13, 14), as extensions of said first fairings (9, 10), the lower edges of said second fairings being joined to the edges of the central part (2).

3. System for optimizing the aerodynamics according to claim 2, wherein in correspondence with said rear part (3) it also comprises:
- third side fairings (15, 16), as extensions of said second fairings (13, 14), tapered and converging, the lower edges of said third fairings being joined to the edges of said rear part (3);
- fixed longitudinal vertical parallel fins (17), projecting from said rear part (3).

4. System for optimizing the aerodynamics according to claim 3, wherein in correspondence with said rear part (3) it also comprises an underrun bar (25) that supports the rear lamps and registration plate-holder, having an aerodynamic rear profile (27) with rounded edges, so as not to hinder the airflow from the underside of the vehicle.

5. System for optimizing the aerodynamics according to claim 3, wherein in correspondence with said rear part (3) it also comprises a projectingly mounted extension (18) on the rear external underside of the semi-trailer, joined to the bottom edge of the doors of the semi-trailer, the lower edge of said extension being rectilinear with an inclination equal to that of the end of said rear part (3).

6. System for optimizing the aerodynamics according to any of the previous claims, wherein side projections are provided along the entire length of the edges of the sides of the aerodynamic underside.

## Patentansprüche

1. System zur Optimierung der aerodynamischen Eigenschaften der Unterseite eines Sattelanhängers eines mit Sattelgelenk ausgestatteten Industriefahrzeugs oder Nutzkraftwagens, wobei dieses System eine aerodynamisch gestaltete Unterseite umfasst, die geeignet ist, die Befestigungsvorrichtungen des Sattelanhängers abzuschirmen und auch geeignet ist, den energiereichen Luftstrom zum Heck des Fahrzeuges zu leiten, um den Druck hinter dem Fahrzeug rückzugewinnen, wobei die aerodynamisch gestaltete Unterseite umfasst:
- einen vorderen Teil (1), welcher zwischen der Zugkupplung des Zugfahrzeugs und dem Beginn des Radbereiches des Sattelanhängers angeordnet ist;
- einen mittleren Teil (2), welcher etwa dem Radbereich des Sattelanhängers entspricht; einen hinteren Teil (3) zwischen dem Ende des Radbereiches und dem hinteren Ende des Sattelanhängers,
wobei die genannten Teile, also der vordere, mittlere und hintere Teil, Abdeckungen (4, 21, 31) der jeweiligen Teile der Unterseite des Sattelanhängers umfassen, welche der Reihe nach miteinander verbunden sind, beginnend von vorn aus einer Höhe, welche derjenigen der Unterseite des Sattelanhängers entspricht, bis zu einer unteren Mindesthöhe vom Boden im genannten mittleren Teil (2) und dann wieder ansteigend zu einer Höhe, welche der Unterseite des Sattelanhängers entspricht, wobei die genannten Abdeckungen (4, 21, 31) des vorderen und des hinteren Teiles in Längsrichtung dergestalt gekrümmt sind, dass sie ein glattes Längsprofil ohne irgend welche scharfkantige Flächen gewährleisten
wobei dieses System **dadurch gekennzeichnet ist, dass** es ferner in Höhe des genannten vorderen Teiles umfasst:
- eine horizontale Klappe (5), welche unterhalb der Abdeckung (4) und in einem gewissen Abstand von dieser angeordnet ist und geeignet ist, für den vom Zugfahrzeug kommenden Luftstrom eine Führung zu bilden;
- Abtrennelemente (6, 7, 8), welche in Bezug auf die Abdeckung vertikal angeordnet sind, eine Halterung für die Klappe (5) bilden und dazu dienen, den Luftstrom zu lenken, wobei die genannten vertikalen Elemente umfassen: ein mittleres und im Wesentlichen geradliniges vertikales Element (6), welches die Mitte der Klappe (5) mit der Mitte der Abdeckung (4) verbindet, zwei vertikale Seitenelemente (7, 8), welche von den Seiten in Richtung auf die Mitte gekrümmt sind und geeignet sind, die mittlere Fläche (4') der Abdeckung von den zwei Seitenflächen (4" , 4"') der Abdeckung (4) abzutrennen;
- erste vertikale Seitenverkleidungen (9, 10) als Verlängerungen der Seitenwände des Sattelanhängers, ausgestattet mit Luftlöchern (11, 12), wobei die genannten ersten Verkleidungen (9, 10) geeignet sind, den äußeren Luftstrom, welcher längs der Seiten des Fahrzeugs strömt, von dem inneren Luftstrom, der längs der Unterseite strömt, abzutrennen, wobei die genannten Luftlöcher (11, 12) ermöglichen, dass die von den Außenseiten des Fahrzeugs kommende Luft nach innen zu die genannten Seitenflächen (4", 4"') gelenkt wird.

2. System zur Optimierung der aerodynamischen Eigenschaften nach Anspruch 1, welches in Höhe des genannten mittleren Teiles (2) auch zweite Seitenverkleidungen (13, 14) als Verlängerungen der genannten ersten Verkleidungen (9, 10) umfasst, wobei die unteren Kanten der genannten zweiten Verkleidungen an die Kanten des mittleren Teiles (2) angefügt sind.

3. System zur Optimierung der aerodynamischen Eigenschaften nach Anspruch 2, welches in Höhe des genannten hinteren Teiles (3) auch umfasst:
- dritte Seitenverkleidungen (15, 16) als Verlängerungen der genannten zweiten Seitenverkleidungen(13, 14), welche sich verjüngen und konvergieren, wobei die unteren Kanten der genannten dritten Verkleidungen an die Kanten des genannten hinteren Teiles (3) angefügt sind;
- feststehende parallele vertikale Längsleitbleche (17), welche vom genannten hinteren Ende (3) abstehen.

4. System zur Optimierung der aerodynamischen Eigenschaften nach Anspruch 3, welches in Höhe des genannten hinteren Teiles (3) auch eine Unterfahrschutzstange (25) umfasst, welche die Rückleuchten und die Halterung für das Nummernschild trägt und ein aerodynamisch gestaltetes Hinterprofil (27) mit abgerundeten Kanten aufweist, so dass der Luftstrom von der Unterseite des Fahrzeugs nicht behindert wird.

5. System zur Optimierung der aerodynamischen Eigenschaften nach Anspruch 3, welches in Höhe des genannten hinteren Teiles (3) an der hinteren äußeren Unterseite des Sattelanhängers auch eine vorstehend montierte Verlängerung (18) umfasst, welche an die Bodenkante der Türen des Sattelanhängers angefügt ist, wobei der untere Rand der genannten Verlängerung geradlinig verläuft und eine Neigung aufweist, welche gleich derjenigen des Endes des genannten hinteren Teiles (3) ist.

6. System zur Optimierung der aerodynamischen Eigenschaften nach irgend einem der vorangehenden Ansprüche, bei welchem die genannten seitlichen Vorsprünge über die gesamte Länge der Kanten der Seiten der aerodynamisch gestalteten Unterseite vorhanden sind.

## Revendications

1. Système pour optimiser l'aérodynamique de la surface inférieure d'une semi-remorque d'un véhicule industriel ou commercial articulé, comportant une surface inférieure aérodynamique adaptée pour masquer les dispositifs de fixation de la semi-remorque, et adaptée pour diriger un écoulement d'air stimulé vers l'arrière du véhicule afin de récupérer de la pression en aval du véhicule, ladite surface inférieure aérodynamique comportant :
- une partie avant (1), agencée entre le dispositif de remorquage du tracteur de véhicule et le début de la zone de roues sur la semi-remorque,
- une partie centrale (2), en correspondance avec la zone de roues sur la semi-remorque,
- une partie arrière (3), entre la fin de la zone de roues et l'extrémité arrière de la semi-remorque,
lesdites parties avant, centrale et arrière comportant des habillages (4, 21, 31) de parties respectives de la surface inférieure de la semi-remorque assemblés en série, débutant à partir de l'avant depuis une hauteur correspondant à la surface inférieure de la semi-remorque, jusqu'à une hauteur minimale inférieure par rapport au sol, dans ladite partie centrale (2), puis augmentant de nouveau dans la partie arrière jusqu'à la hauteur correspondant à la surface inférieure de la semi-remorque,
lesdits habillages (4, 21, 31) des parties avant et arrière étant incurvés longitudinalement de manière à assurer un profil longitudinal lisse, sans zone saillante,
le système étant **caractérisé en ce qu'**il comporte en outre, en correspondance avec ladite partie havant :
- un volet horizontal (5), agencé sous l'habillage (4) et à distance de celui-ci, adapté pour former un guide pour l'écoulement d'air provenant du tracteur de véhicule,
- des éléments de séparation (6, 7, 8) agencés verticalement par rapport à l'habillage, et supportant le volet (5), pour diriger l'écoulement d'air, lesdits éléments verticaux comportant : un élément vertical central et sensiblement rectiligne (6) reliant le centre du volet (5) et le centre de l'habillage (4), deux éléments latéraux verticaux (7, 8) incurvés à partir des côtés vers le centre, adaptés pour séparer la zone centrale (4') de l'habillage (4) des deux zones latérales (4", 4"') de l'habillage (4),
- des premiers carénages latéraux verticaux (9, 10) en tant qu'extensions des parois latérales de la semi-remorque, munis de bouches d'air (11, 12), lesdits premiers carénages (9, 10) étant adaptés pour séparer l'écoulement d'air extérieur, qui s'écoule le long des côtés du véhicule, de l'écoulement d'air intérieur, qui s'écoule le long de la surface inférieure, lesdites bouches d'air (11, 12) étant adaptées pour diriger l'air provenant des côtés extérieurs du véhicule vers l'intérieur dans lesdites zones latérales (4", 4"').

2. Système pour optimiser l'aérodynamique selon la revendication 1, dans lequel, en correspondance avec ladite partie centrale (2), il comporte en outre des deuxièmes carénages latéraux (13, 14), en tant qu'extensions desdits premiers carénages (9, 10), les bords inférieurs desdits deuxièmes carénages étant assemblés avec les bords de la partie centrale (2).

3. Système pour optimiser l'aérodynamique selon la revendication 2, dans lequel, en correspondance avec ladite partie arrière (3), il comporte également :
- des troisièmes carénages latéraux (15, 16), en tant qu'extensions desdits deuxièmes carénages (13, 14), taillés en pointe et convergents, les bords inférieurs desdits troisièmes carénages étant assemblés avec les bords de ladite partie arrière (3),
- des ailettes parallèles verticales longitudinales fixes (17), faisant saillie à partir de ladite partie arrière (3).

4. Système pour optimiser l'aérodynamique selon la revendication 3, dans lequel, en correspondance avec ladite partie arrière (3), il comporte de plus une barre anti-encastrement (25) qui supporte les feux arrière et le support de plaque d'immatriculation, ayant un profil arrière aérodynamique (27) avec des bords arrondis, de manière à ne pas gêner l'écoulement d'air provenant de la surface inférieure du véhicule.

5. Système pour optimiser l'aérodynamique selon la revendication 3, dans lequel, en correspondance avec ladite partie arrière (3), il comporte également une extension montée de manière saillante (18) sur la surface inférieure extérieure arrière de la semi-remorque, assemblée avec les bords inférieurs des portes de la semi-remorque, le bord inférieur de ladite extension étant rectiligne avec une inclinaison égale à celle de l'extrémité de la partie arrière (3).

6. Système pour optimiser l'aérodynamique selon l'une quelconque des revendications précédentes, dans lequel des saillies latérales sont agencées le long de la longueur complète des bords des côtés de la surface inférieure aérodynamique.
